Europäisches Patentamt

European Patent Office

Office européen des brevets

(11) Publication number: **0 280 562**
**A2**

## (12) EUROPEAN PATENT APPLICATION

(21) Application number: 88301657.8

(22) Date of filing: 26.02.88

(51) Int. Cl.⁴: **G 02 B 6/38**

(30) Priority: 26.02.87 GB 8704541
09.04.87 GB 8708494

(43) Date of publication of application:
31.08.88 Bulletin 88/35

(84) Designated Contracting States:
AT BE CH DE ES FR GB GR IT LI LU NL SE

(71) Applicant: BICC Public Limited Company
Devonshire House Mayfair Place
London W1X 5FH (GB)

(72) Inventor: Leevers, David Frederick Andrew
21, Barnaby Gardens
London, W4, 3PR (GB)

Booth, Kim Charles
44, Godolphin Road
London, W12 8JF (GB)

(74) Representative: Ross Gower, Edward Lewis et al
BICC Group Patents & Licensing Department Network
House 1 Ariel Way
London W12 7SL (GB)

(54) Optical fibre splicing.

(57) In an improved method of axially aligning two optical fibres
(20) which are to be permanently secured together,

(i) the two optical fibres are arranged with their axes
parallel and in approximately axial alignment with their
neighbouring end faces spaced apart;

(ii) light is directed towards bare end portions of the
fibres, the light being of such a form and intensity as
provide images of the bare end portions which are visible
to a video camera and which lie parallel to the scanning
lines of the camera to produce a video signal comprising a
plurality of video lines;

(iii) the video signal is applied to a sample and hold
circuit;

(iv) first samples of successive video lines are detected
and held at the same position on each line, these positions
effectively lying in a column (25) passing through the image
of the bare end portion of one fibre, these first samples are
converted to digital form, and positions (28) of significant
differential between these digitised first samples are
detected to locate the profile of the fibre;

(v) second samples of successive video lines are
detected and held at another position on each line, these
other positions effectively lying in a column (25) passing
through the image of the bare end portion of the other
fibre, the second samples are converted to digital form,
and the positions (28) of significant differential between
the digitised second samples are detected to locate the
profile of the other fibre;

(vi) the position of the longitudinal axis of each optical
fibre is determined from the positions of significant
differential between the digitised samples locating the
profile of the fibre; and

(vii) one or each of the fibres is moved transversely with
respect to the other fibre until the longitudinal axes of the
fibres are in axial alignment.

Fig.4.

## Description

### OPTICAL FIBRE SPLICING

This invention relates to effecting a permanent end-to-end splice between two optical fibres, one or each of which may be a component of an optical cable. The abutting ends of two optical fibres to be spliced usually are permanently secured together by fusion or by index-matching adhesive.

In effecting both of these methods of splicing optical fibres, before the two optical fibres are permanently secured together it is necessary to ensure that the cores of the optical fibres are axially aligned for optimum transfer of light from one fibre to the other. Axial alignment of the two fibres is especially critical in the case of single mode optical fibres where the diameter of the core is substantially less than the overall diameter of the optical fibre.

Two methods of obtaining optimum axial alignment of two optical fibres are currently favoured. In the first of these, light is injected into one of the optical fibres either at the end remote from the proposed splice or into a part of the optical fibre which is adjacent to the proposed splice and the amount of light passing into the cladding of the other optical fibre at the abutting ends of the optical fibres is continuously monitored. One or each of the optical fibres is moved transversely with respect to the other until said monitored light is a minimum, thereby indicating the fibres are appropriately axially aligned, and the splice is then effected. In the second of these methods, light is injected into one of the optical fibres either at the end remote from the proposed splice or into a part of the optical fibre which is adjacent the proposed splice and the light transferred into the other optical fibre is continuously monitored at the end of the other optical fibre remote from the proposed splice or at a position in the other optical fibre adjacent the proposed splice. One or each of the optical fibres is moved transversely with respect to the other until the light extracted from the other optical fibre either at its remote end or at said position adjacent the proposed splice is a maximum, thereby indicating the fibres are appropriately axially aligned, and the splice is then effected.

It is an object of the present invention to provide an improved method of substantially aligning the cores of two optical fibres, which method is especially adaptable for automated optical fibre alignment and splicing.

According to the invention, the improved method comprises the steps of:

(i) arranging the two optical fibres with their axes substantially parallel and in approximately axial alignment with their neighbouring end faces spaced apart;

(ii) directing light towards bare end portions of the approximately axially aligned optical fibres, which light is of such a form and intensity as to provide images of said bare end portions which are visible to a video camera and which lie substantially parallel to the scanning lines of the camera to produce a video signal comprising a plurality of video lines;

(iii) applying the video signal to a sample and hold circuit;

(iv) detecting and holding first samples of successive video lines at the same position on each line, said positions effectively lying in a column passing through the image of the bare end portion of one optical fibre, converting said first samples to digital form, and detecting positions of significant differential between said digitised first samples to locate the profile of the optical fibre;

(v) detecting and holding second samples of successive video lines at another position on each line, said other positions effectively lying in a column passing through the image of the bare end portion of the other optical fibre, converting said second samples to digital form, and detecting the positions of significant differential between said digitised second samples to locate the profile of the other optical fibre;

(vi) determining from the positions of significant differential between the digitised samples locating the profile of each optical fibre, the position of the longitudinal axis of the optical fibre; and

(vii) moving one or each of the optical fibres transversely with respect to the other optical fibre until the longitudinal axes of the optical fibres are in substantially axial alignment.

Where the two optical fibres whose cores are to be substantially axially aligned are single mode optical fibres and/or where it is suspected that the longitudinal axes of the cores of the two optical fibres are not co-linear with the longitudinal axes of the optical fibres, preferably, the improved method includes the additional steps of:

(i) detecting positions of significant differential between said digitised first samples to locate the profile of the core of the first optical fibre and detecting positions of significant differential between said digitised second samples to locate the profile of the core of the second optical fibre;

(ii) after one or each of the optical fibres has been moved transversely with respect to the other optical fibre until the longitudinal axes of the optical fibres are in substantially axial alignment, determining from the positions of significant differential locating the profile of the core of each optical fibre, the apparent position of the longitudinal axis of the core;

(iii) comparing the position of the longitudinal axis of each optical fibre with the apparent position of the longitudinal axis of its core to obtain a figure representing the apparent transverse displacement between the longitudinal axis of the optical fibre and the longitudinal axis of its core;

(iv) dividing said figure of each optical fibre by the refractive index of the cladding of the optical fibre to determine the real transverse displacement between the longitudinal axis of the optical fibre and the longitudinal axis of its core; and

(v) moving each optical fibre transversely by the real transverse displacement between the longitudinal axis of the optical fibre and the longitudinal axis of its core, or moving one of the optical fibres transversely by the arithmetical sum of the real displacements between the longitudinal axes of both optical fibres and the longitudinal axes of their cores, so that the longitudinal axes of the cores of the two optical fibres are in substantially axial alignment.

In addition to being especially suitable for single mode optical fibres and/or for cases where the longitudinal axes of the cores of the optical fibres are not co-linear with the longitudinal axes of the optical fibres, the preferred method of substantially aligning the cores of two optical fibres as above described also compensates for the transverse displacement of the true or real position of the longitudinal axis of the core of each optical fibre arising from viewing of the core of the optical fibre through the surrounding cladding which, because it has a refractive index that is not unity, causes refraction of light passing therethrough.

After the two optical fibres have been substantially axially aligned, the optical fibres are brought into substantially abutting relationship and the abutting ends of the optical fibres are permanently secured together, e.g. by fusion or by index-matching adhesive.

Preferably, at least steps (iii) to (vii) of the improved method and, when the preferred method is employed, the additional steps of the preferred method, are effected in sequence automatically under the control of a microprocessor or other computing apparatus. Preferably, also, the additional steps of bringing the axially aligned optical fibres into substantially abutting relationship and permanently securing the abutting ends of the optical fibres together are also effected in sequence automatically under the control of a microprocessor or other computing apparatus.

The axially aligned optical fibres are preferably brought into substantially abutting relationship by detecting and holding samples of successive video lines at a position on each line effectively lying in a number of columns passing through and immediately adjacent the end face of the image of the bare end portion of one optical fibre, converting said samples to digital form, and detecting that column with positions of significant differential between said digitised samples which is immediately adjacent a column having no positions of significant differential between said digitised samples; detecting and holding samples of successive video lines at the same position on each line effectively lying in a number of columns passing through and immediately adjacent the end face of the image of the bare end portion of the other optical fibre, converting said samples to digital form, and detecting that column with positions of significant differential between said digitised samples which is immediately adjacent a column with no positions of significant differential between said digitised samples; and moving at least one of said axially aligned optical fibres in a lengthwise direction towards the other of said optical fibres until said columns having positions of significant differential between said digitised samples substantially overlap or are immediately adjacent, thereby indicating that the end faces of the optical fibres substantially abut.

Preferably, viewing by the video camera of the bare end portions of the approximately axially aligned optical fibres is effected through a microscope and, preferably also, to provide for continuous visual monitoring of the aligning and optical fibre splicing process, magnified images of the bare end portions of the two optical fibres are displayed on a screen. The light directed towards the bare end portions of the approximately axially aligned optical fibres preferably is from a light source positioned on the side of the optical fibres remote from the microscope and video camera.

The improved method of the present invention can also be modified to axially align and subsequently splice in sequence the optical fibres of an optical fibre ribbon comprising a plurality of optical fibres extending side by side with their axes lying in a substantially common plane.

The invention will be further illustrated by a description, by way of example, of the preferred method of substantially aligning the cores of two single mode optical fibres with reference to the accompanying drawings, in which:-

Figure 1 is a diagrammatic representation of the principal components of the apparatus used in the preferred method;

Figure 2 is a pictorial illustration of the alignment of two optical fibres effected from the location of the profiles of two optical fibres;

Figure 3 is a pictorial illustration of the alignment of the two optical fibres shown in Figure 2 effected from the location of the profiles of the cores of the two optical fibres, and

Figure 4 is a diagrammatic representation of the preferred method of substantially aligning the cores of two single mode optical fibres.

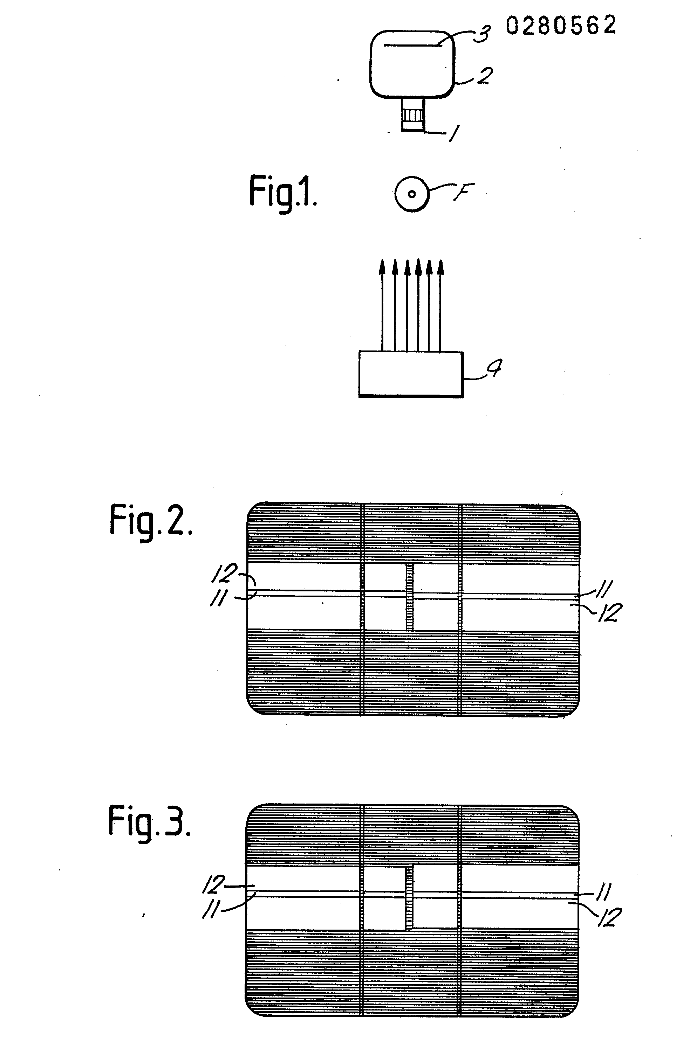

Referring to Figure 1, a microscope 1 and a video camera 2 are positioned to one side of a pair of optical fibres F which are to be aligned, the video camera incorporating a charge coupled device image sensor 3. On the side of the optical fibres F diametrically opposite the microscope 1, a light source 4 directs light towards the video camera 2. Magnified images of the end portions of the two optical fibres F are displayed on a screen (not shown).

Figure 2 illustrates the magnified images of two optical fibres whose alignment has been effected from location of the profiles of the optical fibres. Each optical fibre comprises a core 11 and a cladding 12. As will be seen, the claddings 12 of the two optical fibres are axially aligned but, because the core 11 of one or each of the optical fibres is not centrally positioned with respect to the cladding, the cores are not axially aligned. Where the optical fibres are multimode optical fibres this may not be important, but where each of the optical fibres is a single mode optical fibre it is necessary to move one of the optical fibres transversely with respect to the other in order that their cores 11 are axially aligned. As will be seen on referring to Figure 3, when the magnified images of the cores 11 of the two optical fibres are axially aligned, the claddings 12 are not.

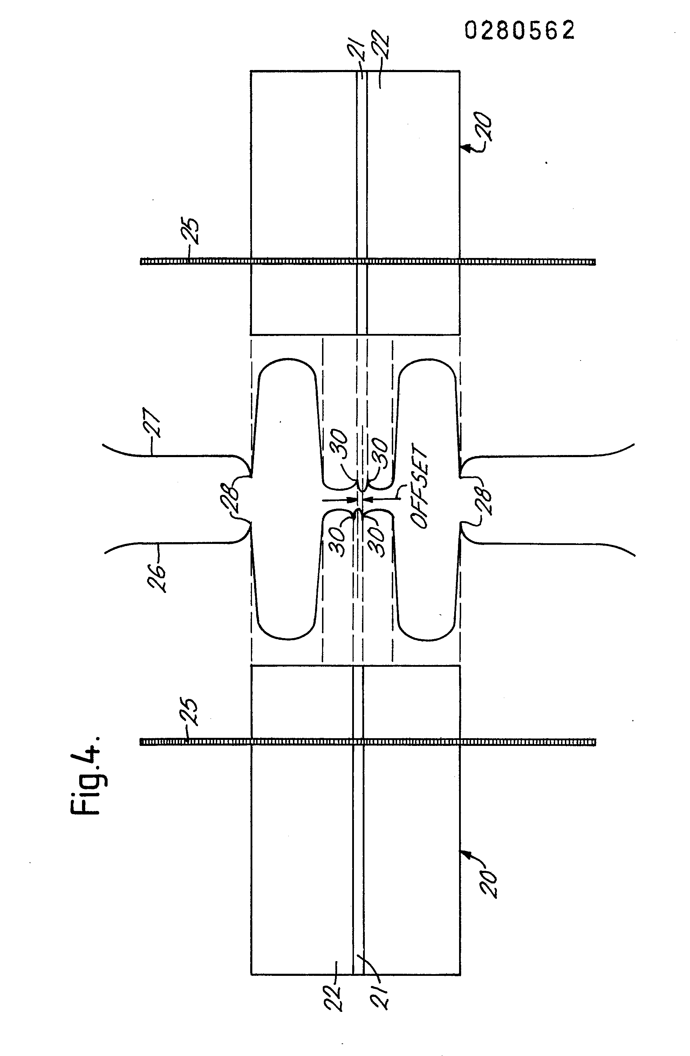

Figure 4 illustrates diagrammatically the preferred method of substantially aligning the cores 21 of two single mode optical fibres 20, each comprising a core 21 and a cladding 22. In this method, the two optical fibres 20 are arranged with their axes parallel and in approximately axial alignment with their neighbouring end faces spaced apart. Light from the source 4 is directed towards the end portions of the approximately axially aligned optical fibres 20, this light being of such a form and intensity as to provide images of the bare end portions which are visible to the video camera 2 incorporating the charge coupled device image sensor 3. Magnified images of the bare end portions of the two fibres 20 are displayed on a screen. These images lie parallel to the rows of the sensor 3 to produce a video signal comprising a plurality of video lines. This video signal is applied to a sample and hold circuit.

First samples of successive video lines are detected and held at the same position on each line, these positions effectively lying in a column 25 passing through the image of the bare end portion of one of the two optical fibres 20. These first samples are converted to digital form and positions of significant differential between these digitised first samples are located to detect the profile of the optical fibre. As will be seen on the light intensity profile 26, the positions 28 of significant differential between the digitised first samples clearly detect the profile of the optical fibre 20. Second samples of successive video lines are detected and held at another position on each line, these other positions effectively lying in a column 25 passing through the image of the bare end portion of the second optical fibre 20. These second samples are converted to digital form and the positions of significant differential between these digitised second samples are detected to locate the profile of the second optical fibre. This can be seen on the light intensity profile 27.

The position of the longitudinal axis of each optical fibre 20 having regard to the cladding 22 of the optical fibre is then determined from the positions 28 of significant differential of the digitised samples locating the profile of the optical fibre and one or each of the optical fibres is then moved transversely with respect to the other optical fibre until the longitudinal axes of the two optical fibres are in substantially axial alignment.

In order to avoid the risk that the longitudinal axes of the optical fibres 20 are not co-linear with the longitudinal axes of the cores 21 of the two optical fibres, positions 30 of significant differential between the digitised first samples are detected to locate the profile of the core 31 of the first optical fibre and positions 30 of significant differential between the digitised second samples are detected to locate the profile of the core 21 of the second optical fibre. The apparent position of the longitudinal axis of the core 21 of each optical fibre 30 is then determined from the positions 30 of significant differential locating the profile of the core of the optical fibre.

The position of the longitudinal axis of each optical fibre 20 is then compared with the apparent position of the longitudinal axis of its core to obtain a figure representing the apparent transverse displacement between the longitudinal axis of the fibre and the longitudinal axis of its core. Since the cores 21 of the two optical fibres 20 are being viewed by the microscope 1 through their claddings 22, in order to determine the real transverse displacement between the longitudinal axis of each optical fibre and the longitudinal axis of its core, the figure obtained representing the apparent transverse displacement between the longitudinal axis of each optical fibre 20 and the longitudinal axis of its core 21 is divided by the refractive index of the cladding of the optical fibre. Each optical fibre 20 is then moved transversely by the real transverse displacement between the longitudinal axis of the optical fibre and the longitudinal axis of its core 21, or one of the optical fibres is moved transversely by the arithmetical sum of the real displacement between the longitudinal axes of both optical fibres and the longitudinal axes of their cores 21, so that the longitudinal axes of the cores of the two optical fibres are in substantially axial alignment.

The axially aligned optical fibres 20 are now brought into substantially abutting relationship by detecting and holding samples of successive video lines at a position on each line effectively lying in a number of columns passing through and immediately adjacent the end face of the image of the bare end portion of one optical fibre, converting these samples to digital form, and detecting that column with positions of significant differential between the said digitised samples which is immediately adjacent a column having no positions of significant differential between said digitised samples, thereby locating the column with positions of significant differential between said digitised samples which is immediately adjacent the end face of the optical fibre. The same procedure is then followed with respect to the second optical fibre to locate the column with positions of significant differential between the digitised second samples which locates the end face of the second optical fibre. At least one of the axially aligned optical fibres is then moved in a lengthwise direction towards the other of the optical fibres until said columns having positions of significant differential between the digitised samples locating the end faces of the optical fibres substantially overlap or are immediately adjacent, thereby indicating that the end faces of the optical fibres substantially abut. The abutting ends of the optical fibres are then permanently secured together by fusion splicing.

All steps of the method described with reference to Figure 4 are effected in sequence automatically under the control of a microprocessor.

The improved method of the present invention has the important advantage that the method can be used with substantially any kind of optical fibre because neither optical fibre need have a coating of a material which is transparent to light and because there is no necessity to effect a bend in either optical fibre to provide for the injection or extraction of a light signal.

## Claims

1. A method of substantially aligning the cores (21) of two optical fibres (20) which comprises the steps of:

i) arranging the two optical fibres with their axes substantially parallel and in approximately axial alignment with their neighbouring end faces spaced apart;

ii) directing light towards bare end portions of the approximately axially aligned optical fibres, which light is of such a form and intensity as to provide images of said bare end portions which are visible to a video camera (2) and which lie substantially parallel to the scanning lines of the camera to produce a video signal comprising a plurality of video lines;

iii) applying the video signal to a sample and hold circuit;

iv) detecting and holding first samples of successive video lines at the same position on each line, said positions effectively lying in a column passing through the image of the bare end portion of one optical fibre, converting said first samples to digital form, and detecting positions 28 of significant differential between said digitised first samples to locate the profile of the optical fibre;

v) detecting and holding second samples of successive video lines at another position on each line, said other positions effectively lying in a column passing through the image of the bare end portion of the other optical fibre, converting said second samples to digital form, and detecting the positions (28) of significant differential between said digitised second samples to locate the profile of the other optical fibre;

vi) determining from the positions of significant differential between the digitised samples locating the profile of each optical fibre, the position of the longitudinal axis of the optical fibre; and

vii) moving one or each of the optical fibres transversely with respect to the other optical fibre until the longitudinal axes of the optical fibres are in substantially axial alignment.

2. A method as claimed in Claim 1 which includes the additional steps of:

i) detecting positions (30) of significant differential between said digitised first samples to locate the profile of the core of the first optical fibre and detecting positions (30) of significant differential between said digitised second samples to locate the profile of the core of the second optical fibre;

ii) after at least one of the optical fibres has been moved transversely with respect to the other optical fibre until the longitudinal axes of the optical fibres are in substantially axial alignment, determining from the positions (30) of significant differential locating the profile of the core of each optical fibre, the apparent position of the longitudinal axis of the core;

iii) comparing the position of the longitudinal axis of each optical fibre with the apparent position of the longitudinal axis of its core to obtain a figure representing the apparent transverse displacement between the longitudinal axis of the optical fibre and the longitudinal axis of its core;

iv) dividing said figure of each optical fibre by the refractive index of the cladding (22) of the optical fibre to determine the real transverse displacement between the longitudinal axis of the optical fibre and the longitudinal axis of its core; and

v) moving each optical fibre transversely by the real transverse displacement between the longitudinal axis of the optical fibre and the longitudinal axis of its core, or moving one of the optical fibres transversely by the arithmetical sum of the real displacements between the longitudinal axes of both optical fibres and the longitudinal axes of their cores, so that the longitudinal axes of the cores of the two optical fibres are in substantially axial alignment.

3. A method as claimed in Claim 1, wherein at least steps (iii) to (vii) of the method are effected in sequence automatically under the control of computing apparatus.

4. A method as claimed in Claim 2, wherein at least steps (iii) to (vii) of the method of Claim 1 and said additional steps are effected in sequence automatically under the control of computing apparatus.

5. A method as claimed in any one of the preceding Claims, wherein viewing by the video camera of the bare end portions of the approximately axially aligned optical fibres is effected through a microscope (1).

6. A method as claimed in Claim 5, wherein the light directed towards the bare end portions of the approximately axially aligned optical fibres is from a light source (4) positioned on the side of the optical fibres remote from the microscope and video camera.

7. A method as claimed in any one of the preceding Claims, wherein, to provide for continuous visual monitoring of the steps of the method, magnified images of the bare end portions of the two optical fibres are displayed on a screen.

8. A method of effecting a permanent end-to-end splice between two optical fibres, wherein the cores of the two optical fibres are substantially aligned by the method claimed in Claim 1 and, after the two optical fibres have been substantially axially aligned, the optical fibres are brought into substantially abutting relationship and the abutting ends of the optical fibres are permanently secured together.

9. A method as claimed in Claim 8, wherein the steps of bringing the axially aligned optical fibres into substantially abutting relationship and permanently securing the abutting ends of the optical fibres together are effected in sequence automatically under the control of computing apparatus.

10. A method as claimed in Claim 8 or 9, wherein the axially aligned optical fibres are brought into substantially abutting relationship by detecting and holding samples of successive video lines at a position on each line effectively lying in a number of columns passing through and immediately adjacent the end face of the image of the bare end portion of one optical fibre, converting said samples to digital form, and detecting that column with positions of significant differential between said digitised samples which is immediately adjacent a column having no positions of significant differential between said digitised samples; detecting and holding samples of successive video lines at the same position on each line effectively lying in a number of columns passing through and immediately adjacent the end face of the image of the bare end portion of the other optical fibre, converting said samples to digital form, and detecting that column with positions of significant differential between said digitised samples which is immediately adjacent a column with no positions of significant differential between said digitised samples; and moving at least one of said axially aligned optical fibres in a lengthwise direction towards the other of said optical fibres until said columns having positions of significant differential between said digitised samples substantially overlap, thereby indicating that the end faces of the optical fibres substantially abut.

29·03·88

0280562

Fig.1.

Fig.2.

Fig.3.

# Fig.4.

26  27

28

25  25

22

21

30  30

30  30

OFFSET

21

22

20  20

28

0280562